# EUROPÄISCHE PATENTSCHRIFT

(11) **EP 3 367 542 B1**
(45) Veröffentlichungstag und Bekanntmachung des Hinweises auf die Patenterteilung: **26.10.2022**
(21) Anmeldenummer: 18156835.3
(22) Anmeldetag: 15.02.2018
(51) Int. Cl.: H02K 5/26

(54) **VERBINDUNGSEINHEIT FÜR EIN GEBLÄSE**
CONNECTION UNIT FOR A BLOWER
UNITÉ DE RACCORDEMENT POUR UN VENTILATEUR

(30) Priorität: 23.02.2017 DE 102017103774; 07.07.2017 DE 102017115214
(43) Veröffentlichungstag der Anmeldung: 29.08.2018
(73) Patentinhaber: ebm-papst Landshut GmbH, 84030 Landshut (DE)
(72) Erfinder: Deininger, Martin, 84144 Geisenhausen (DE); Hertreiter, Martin, 84180 Loiching (DE); Schlopakowski, Frank, 84034 Landshut (DE)
(74) Vertreter: Staeger & Sperling Partnerschaftsgesellschaft mbB

(56) Entgegenhaltungen:
- EP-A1- 1 900 083
- EP-A2- 2 586 118
- EP-B1- 1 900 083
- EP-B1- 2 586 118
- WO-A1-2008/098389
- CA-A- 755 962
- DE-A1-102014 224 917
- FR-A1- 2 975 143
- JP-A- 2016 116 345
- JP-A- 2016 181 950
- US-A- 6 024 543
- US-A1- 2013 078 108

## Beschreibung

Die Erfindung betrifft eine Verbindungseinheit für ein Gebläse gebildet aus einem Seitenteil eines Gebläsegehäuses und einem Motorträger für einen Antriebsmotor des Gebläses.

Gebläsegehäuse können in verschiedenen Varianten aufgebaut werden. Als eine aus dem Stand der Technik bekannte Variante wird das Gebläsegehäuse durch einen Gebläsegehäuseteil und ein Seitenteil bestimmt, wobei das Gebläsegehäuseteil das Gebläserad aufnimmt und den Druckraum bildet, das Seitenteil hingegen als eine Art das Gebläsegehäuseteil axial verschließender Deckel ausgebildet ist, an dem der Antriebsmotor für das Gebläse befestigbar ist.

Seitenteile werden im Stand der Technik aus Aluminiumdruckguss hergestellt. Zur Befestigung des Antriebsmotors werden Motorträger je nach Kundenanforderung an festgelegten Positionen fixiert. Die Motorposition an dem Seitenteil muss aufgrund unterschiedlicher bevorzugter Einbaupositionen des Motors gegenüber dem Gehäuse variabel gestaltet sein. Hierfür werden stets mehrere Seitenteilvarianten bereitgestellt, in denen der Motorträger je nach gewünschter Einbauposition des Motors verschraubt wurde. Dies ist jedoch aufwendig und teuer.

Druckschriftlicher Stand der Technik im vorliegenden technischen Gebiet ist offenbart in Dokument CA 755 962 A und in Dokument DE 10 2014 224 917 A1, bei dem ein Motorträger in verschiedenen Positionen befestigbar ist.

Vor diesem Hintergrund ist es Aufgabe der Erfindung, eine Verbindungseinheit für ein Gebläse gebildet aus einem Seitenteil eines Gebläsegehäuses und einem Motorträger bereit zu stellen, welche die gewünschte Variabilität bezüglich der gewünschten Motorposition gegenüber dem Gebläsegehäuse gewährleistet, ohne dass hierfür unterschiedliche Seitenteile nötig sind.

Die Aufgabe wird gelöst durch die Merkmalskombination gemäß Patentanspruch 1.

Erfindungsgemäß wird eine Verbindungseinheit gebildet aus einem Seitenteil eines Gebläsegehäuses und einem Motorträger für einen Antriebsmotor eines Gebläses vorgeschlagen, wobei der Motorträger gegenüber einer in Axialrichtung des Seitenteils verlaufenden Rotationsachse in verschiedenen Rotations- bzw. Winkelpositionen an dem Seitenteil befestigbar ist.

Durch die erfindungsgemäße Lösung ist es möglich, mit nur einer Ausführung eines Seitenteils die unterschiedlichen kundenspezifischen Anforderungen bezüglich der Rotationsposition des Motorträgers und mithin des Antriebsmotors gegenüber dem Gehäuse zu realisieren.

Der Anwender kann durch die erfindungsgemäße Lösung den Motor im Verhältnis zum Gehäuse beliebig drehen, so dass z.B. auch der Motorstecker je nach Einsatz optimal positioniert werden kann. Dies begünstigt auch eine optimale Führung der Kabel zum Motor.

Insbesondere ist die Ausführung der Verbindungseinheit erfindungsgemäß, bei der eine Winkeldrehung des Motorträges gegenüber dem Seitenteil zur Festlegung der verschiedenen Rotations- bzw. Winkelpositionen des Motorträgers an dem Seitenteil beliebig variabel ist. Das bedeutet, dass jeder Relativwinkel realisierbar ist und das Seitenteil und der Motorträger diesbezüglich beliebig zueinander festlegbar sind. Beispielsweise wäre dies nicht der Fall, wenn an dem Seitenteil oder dem Motorträger Halterungen, Vorsprünge, Aussparungen oder dergleichen ausgebildet wären, die eine relative Position in nur bestimmten Relativwinkeln erlauben würde.

Die erfindungsgemäße Verbindungseinheit soll insbesondere auch für vormischende Gas-Luft-Gebläse verwendbar sein, so dass als erfindungsgemäße Ausführung der Motorträger mit dem Seitenteil gasdicht verbunden ist Gas-Luft-Gebläse werden bei Boilern verbaut, wobei gerade in diesem Bereich eine spezielle Führung der Motorkabel, insbesondere eine vibrationsarme Führung besonders wichtig ist. Dies wird durch die flexible Anordnung des Motorträgers und mithin des Motors gegenüber dem Seitenteil gewährleistet.

Eine derartige gasdichte und ohnedies kostengünstige Verbindung des Motorträgers am Seitenteil wird erfindungsgemäß durch einen Klebe- oder Clinchprozess erreicht.

Die Verbindungseinheit ist in einer Weiterbildung dadurch gekennzeichnet, dass der Clinchprozess durch eine druckknopfartige, formschlüssige Verbindung des Motorträgers mit dem Seitenteil in einem Kaltumformprozess erfolgt. Derart verarbeitet entsteht beispielsweise eine Tox-Verbindung.

Bezüglich der Kosten ist günstig, dass das Seitenteil der Verbindungseinheit ein Blechteil ist. Dadurch, dass keine das Seitenteil durchdringenden Befestigungsmittel wie Schrauben oder dergleichen verwendet werden, kann als Material Blech verwendet werden.

In einer Ausführung der Verbindungseinheit ist vorgesehen, dass das Seitenteil mindestens zwei Press-Positionierungsvorsprünge zur Winkel-Positionsfestlegung des Seitenteils auf dem Gebläsegehäuse aufweist. An dem Gebläsegehäuseteil, auf den das Seitenteil aufgesetzt wird, können entsprechende Arretierungsmittel zum Zusammenwirken mit den Press-Positionierungsvorsprüngen vorgesehen sein.

Ferner ist eine Ausbildung der Verbindungseinheit günstig, bei der das Seitenteil eine axiale Durchgangsöffnung zur Durchführung einer Welle aufweist, jedoch im Übrigen durchgangsöffnungsfrei ausgebildet ist. Die Welle dient als Antriebswelle des Antriebsmotors und wird von außen durch das Seitenteil ins Innere des Gehäuses geführt. Weitere Öffnungen oder Löcher, beispielsweise zur Befestigung des Motorträgers sind nicht weiter benötigt.

In einer Weiterbildung der Verbindungseinheit weist das Seitenteil eine axiale Einsenkung auf, in der der Motorträger angeordnet ist. Der axiale Aufbau ist somit kompakter. Zudem kann sich der Motorträger an Randabschnitten der Einsenkung in radialer Richtung abstützen, so dass der Motorträger hinsichtlich der Position auf dem Seitenteil festgelegt ist. Vor der Befestigung des Motorträgers am Seitenteil bzw. in der Einsenkung des Seitenteils, wird lediglich noch die Rotations- bzw. Winkelposition zwischen Motorträger und Seitenteil festgelegt.

Der Motorträger weist mindestens eine, vorzugsweise jedoch mindestens drei Motoraufnahmen auf, die jeweils in Umfangsrichtung zueinander beabstandet an dem Motorträger ausgebildet sind und einen Eingriff in Teile des Motors selbst oder den Motor umschließenden Motorteile wie beispielsweise einen Lagerschild oder dergleichen ermöglichen, so dass der Motor unmittelbar oder mittelbar mit dem Motorträger verbunden werden kann.

Zudem ist eine Ausführung günstig, bei der jede der Motoraufnahmen je eine Einsetzöffnung zur Aufnahme von Vibrationsdämpfungselementen ausbilden.

Als Vibrationsdämpfungselemente kommen beispielsweise Gummitüllen zum Einsatz, die in die Einsetzöffnungen eingeknöpft werden können.

Ferner ist eine Ausführung der Verbindungseinheit vorsehbar, bei welcher der Motorträger ein Ringelement aufweist, von dem aus sich jede der Motoraufnahmen einstückig in Radial- und Axialrichtung abstehend weg erstreckt. Die Motoraufnahmen können somit ausgerichtet sein, dass eine gedachte Verbindungslinie zwischen den Motoraufnahmen und entlang der Vibrationsdämpfungselementen zu einem Schwerpunkt des zu befestigenden Motors gerichtet ist.

Zudem ist in einer Ausführung vorgesehen, dass der Motorträger mindestens eine, vorzugsweise mehrere Befestigungshalterungen zur Befestigung einer Motorschutzkappe aufweist. Durch die Befestigung der Motorschutzkappe am Motorträger kann ein geräuschverursachender Kontakt mit dem Seitenteil vermieden werden. Zudem kann mehr Wärme abtransportiert werden. Der Motorträger integriert mithin ferner in vorteilhafterweise die Funktionen Motoraufnahme, Befestigung am Seitenteil und Aufnahme der Motorschutzkappe in einem Bauteil.

Die Erfindung umfasst ferner ein Gebläse mit einem Gebläsegehäuse, wobei das Gebläse eine Verbindungseinheit gemäß den vorstehenden Merkmalen aufweist.

Andere vorteilhafte Weiterbildungen der Erfindung werden nachstehend zusammen mit der Beschreibung der bevorzugten Ausführung der Erfindung anhand der Figuren näher dargestellt. Es zeigen:
- Fig. 1: eine erfindungsgemäße Verbindungseinheit;
- Fig. 2: die Verbindungseinheit aus Fig. 1 in einer Explosionsdarstellung ;
- Fig. 3: die Verbindungseinheit aus Fig. 1 und 2 mit einem eingebauten Rotor eines Antriebsmotors;
- Fig. 4: die Verbindungseinheit aus Fig. 3 mit einer aufgesetzten Motorschutzkappe.

Alle offenbarten Merkmale sind beliebig kombinierbar soweit dies technisch möglich und nicht widersprüchlich ist. Gleiche Bezugszeichen benennen gleiche Teile in allen Ansichten.

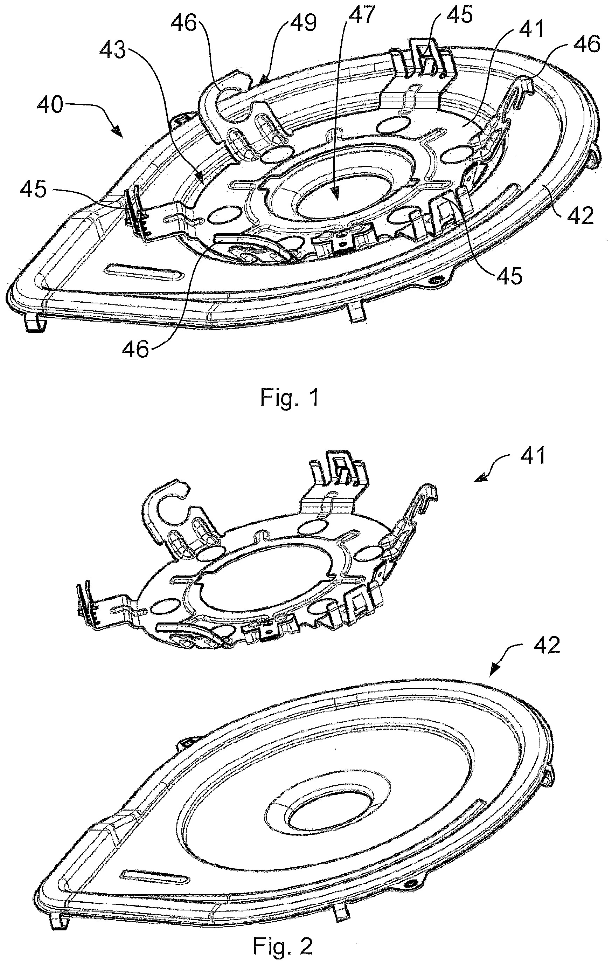

Die Figuren 1 und 2 zeigen eine Verbindungseinheit 40 in einer perspektivischen und in einer Explosionsdarstellung, die gebildet ist aus dem Seitenteil 42 des Gebläsegehäuses und dem Motorträger 41 für den Antriebsmotor eines Gebläses. Das Seitenteil 42 ist ein Blechteil und wird auf einen den übrigen Teil des Gebläsegehäuses bildenden Gebläsegehäusekörper, in dem das Laufrad angeordnet ist, axial wie ein Gehäusedeckel aufgesetzt.

Das Seitenteil 42 umfasst eine Durchgangsöffnung 47 zur Durchführung einer Antriebswelle, ist jedoch im Übrigen durchgangsöffnungsfrei ausgebildet, wie in Figur 2 zu erkennen. Der Motorträger 41 wird gegenüber der in Axialrichtung des Seitenteils 42 verlaufenden Rotationsachse, die sich axial und zentral durch die Durchgangsöffnung 47 des Seitenteils 42 erstreckt, in beliebiger Rotations- bzw. Winkelposition an dem Seitenteil 42 befestigt. Figur 2 zeigt in der Explosionsdarstellung den Motorträger 41 in unbefestigtem Zustand, wobei die Rotations- bzw. Winkelposition durch Drehung um die Rotationsachse zunächst wunschgemäß festlegbar ist und die Teile Motorträger 41 und Seitenteil 42 im Anschluss miteinander befestigt werden. In Figur 1 sind beide Teile miteinander verklebt.

In dem Seitenteil 42 ist die axiale Einsenkung 43 ausgebildet, in die der Motorträger 41 eingesetzt und fixiert wird. Der Motorträger 41 umfasst ein Ringelement mit daran einstückig ausgebildeten drei Motoraufnahmen 46 und drei Befestigungshalterungen 45, die sich axialer und radialer Richtung nach schräg außen erstrecken und mithin gegenüber dem Seitenteil 42 axial und radial hervorstehen. Die axiale Einsenkung 43 bestimmt die Position für das Ringelement des Motorträgers 41 gegenüber der Durchgangsöffnung 47, jedoch nicht die frei wählbare Winkelposition.

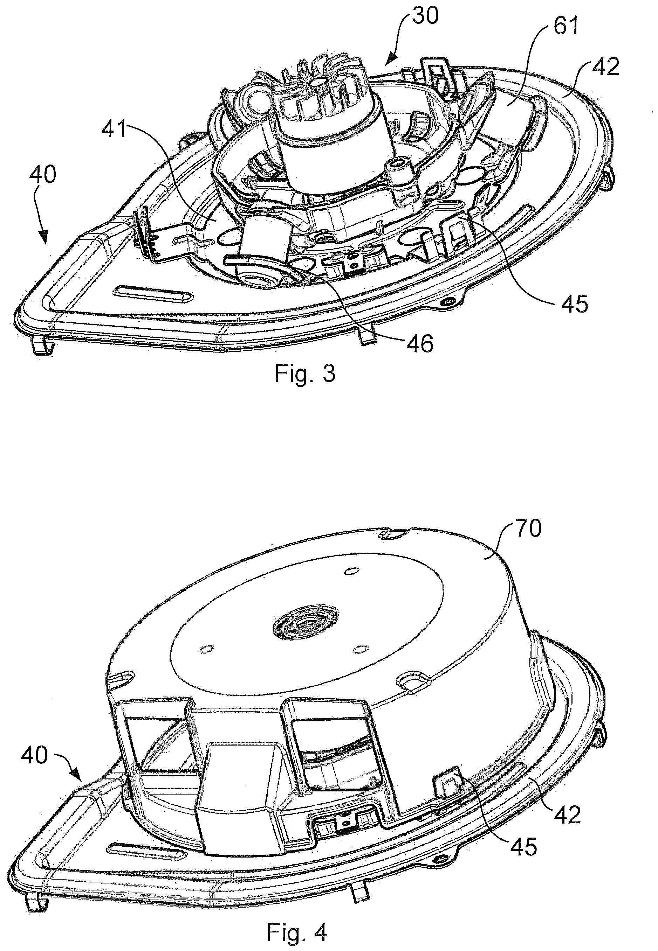

Wie in Figur 3 zu erkennen, umfassen die Motoraufnahmen 46 je eine seitliche offene Einsetzöffnung 49 zur Aufnahme von als Gummitüllen ausgebildeten Vibrationsdämpfungselementen 61. Die Vibrationsdämpfungselemente 61 sind mit umlaufenden Nuten auf einer ersten Seite in die Motoraufnahmen 46, auf der axial gegenüberliegenden Seite in eine Motorhalterung mit darin dargestelltem Rotor 30 des Antriebsmotors eingeknöpft, so dass die axiale Mittellinie der Vibrationsdämpfungselemente 61 zu einem Scherpunkt des Antriebsmotors zeigt. Der Antriebsmotor wird durch den Motorträger 41 schwebend über und axial zu dem Seitenteil 42 beabstandet gehalten.

Bezugnehmend auf die Figuren 3 und 4 ist ferner gezeigt, dass der Motorträger 41 drei Befestigungshalterungen 45 zur Befestigung der Motorschutzkappe 70 aufweist, die den Antriebsmotor vollständig überdeckt. Die Motorschutzkappe 70 ist in die Befestigungshalterungen 45 eingeklipst. Durch die variable Befestigungsposition zwischen Motorträger 41 und Seitenteil 42 in Rotationsrichtung ist der gesamte Aufbau aus Motorträger 41, Antriebsmotor und Motorschutzkappe 70 je nach benötigter Einbauart gegenüber dem Seitenteil 42 um die Rotationsachse rotierbar und mittels dem Motorträger 41 an dem Seitenteil 42 und mithin an dem Gebläsegehäuse befestigbar

## Patentansprüche

1. Verbindungseinheit gebildet aus einem Seitenteil (42) eines Gebläsegehäuses und einem Motorträger (41) für einen Antriebsmotor eines Gebläses, wobei der Motorträger (41) ein Ringelement aufweist und gegenüber einer in Axialrichtung des Seitenteils (42) verlaufenden Rotationsachse in verschiedenen Rotations- bzw. Winkelpositionen an dem Seitenteil (42) befestigbar ist, wobei das Seitenteil (42) eine axiale Einsenkung (43) aufweist, in der das Ringelement des Motorträgers (41) eingesetzt und fixiert ist, wobei der Motorträger (41) mit dem Seitenteil (42) zweiteilig ausgebildet und über einen Klebe- oder Clinchprozess gasdicht verbunden ist, und wobei eine Winkeldrehung des Motorträges (41) gegenüber dem Seitenteil (42) zur Festlegung der verschiedenen Rotations- bzw. Winkelpositionen des Motorträgers (41) an dem Seitenteil (42) beliebig variabel ist, so dass jeder Relativwinkel realisierbar ist und das Seitenteil (42) und der Motorträger (41) diesbezüglich beliebig zueinander festlegbar sind.

2. Verbindungseinheit nach Anspruch 1, **dadurch gekennzeichnet, dass** der Clinchprozess durch eine druckknopfartige, formschlüssige Verbindung des Motorträgers (41) mit dem Seitenteil (42) in einem Kaltumformprozess erfolgt.

3. Verbindungseinheit nach einem der Ansprüche 1 bis 2, **dadurch gekennzeichnet, dass** das Seitenteil (42) ein Blechteil ist.

4. Verbindungseinheit nach einem der Ansprüche 1 bis 3, **dadurch gekennzeichnet, dass** das Seitenteil (42) mindestens zwei Press-Positionierungsvorsprünge zur Winkel-Positionsfestlegung des Seitenteils (42) auf dem Gebläsegehäuse aufweist.

5. Verbindungseinheit nach einem der Ansprüche 1 bis 4, **dadurch gekennzeichnet, dass** das Seitenteil (42) eine axiale Durchgangsöffnung (47) zur Durchführung einer Welle aufweist, jedoch im Übrigen durchgangsöffnungsfrei ausgebildet ist.

6. Verbindungseinheit nach einem der Ansprüche 1 bis 5, **dadurch gekennzeichnet, dass** der Motorträger (41) mindestens eine Motoraufnahme aufweist.

7. Verbindungseinheit nach einem der Ansprüche 1 bis 6, **dadurch gekennzeichnet, dass** der Motorträger (41) mindestens drei Motoraufnahmen aufweist.

8. Verbindungseinheit nach einem der Ansprüche 6 bis 7, **dadurch gekennzeichnet, dass** jede der Motoraufnahmen (46) je eine Einsetzöffnung (49) zur Aufnahme von Vibrationsdämpfungselementen (61) ausbilden.

9. Verbindungseinheit nach einem der Ansprüche 6 bis 8, **dadurch gekennzeichnet, dass** der Motorträger (41) das Ringelement aufweist, von dem aus sich jede der Motoraufnahmen (46) in Radial- und Axialrichtung abstehend weg erstreckt.

10. Verbindungseinheit nach einem der Ansprüche 1 bis 9, **dadurch gekennzeichnet, dass** der Motorträger (41) mindestens eine Befestigungshalterung (45) zur Befestigung einer Motorschutzkappe (70) aufweist.

11. Gebläse mit einem Gebläsegehäuse, wobei das Gebläse eine Verbindungseinheit (40) gemäß einem der vorigen Ansprüche aufweist.

## Claims

1. Connector unit formed out of a side piece (42) of a blower housing and an engine mounting plate (41) for a drive motor of a blower, wherein the engine mounting plate (41) has a ring element and is attachable to the side piece (42) in various rotational or alternatively angular positions vis-à-vis a rotational axis that runs in an axial direction to the side piece (42), wherein the side piece (42) has an axial countersinking (43), in which the ring element of the engine mounting plate (41) is arranged and fixed, wherein the engine mounting plate (41) is formed as two pieces with the side piece (42) and is connected to the side piece (42) by means of a bonding or clinching process in a gas-tight manner, and wherein an angular rotation of the engine mounting plate with respect to the side piece (42) for the determination of the various rotational or alternatively angular positions of the engine mounting plate (41) is infinitely variable on the side piece (42), such that every relative angle can be achieved and the side piece (42) and the engine mounting plate (41), in this respect, can be determined, at will, in relation to one another.

2. Connector unit according to Claim 1, that is **characterized by** the fact that the clinching process occurs by means of a push-button-like, interlocking connection of the engine mounting plates (41) with the side piece (42) in a cold forming process.

3. Connector unit according to one of the Claims 1 to 2, that is **characterized by** the fact that the side piece (42) is a sheet metal piece.

4. Connector unit according to one of the Claims 1 to 3, that is **characterized by** the fact that the side piece (42) has at least two press-mount position protrusions for the determination of the angular position of the side pieces (42) on the blower housing.

5. Connector unit according to one of the Claims 1 to 4, that is **characterized by** the fact that the side piece (42) has an axial passage opening (47) for the routing of a shaft, but that for the rest is free of passage openings.

6. Connector unit according to one of the Claims 1 to 5, that is **characterized by** the fact that the engine mounting plate (41) has at least one motor support.

7. Connector unit according to one of the Claims 1 to 6, that is **characterized by** the fact that the engine mounting plate (41) has at least three motor supports.

8. Connector unit according to one of the Claims 6 to 7, that is **characterized by** the fact that each of the motor supports (46) each forms an insertion opening (49) for the accommodation of elements for the dampening of vibration (61).

9. Connector unit according to one of the Claims 6 to 8, that is **characterized by** the fact that the engine mounting plate (41) has said ring element, from which each of the motor supports (46) integrally extends away in a radial and axial direction.

10. Connector unit according to one of the Claims 1 to 9, that is **characterized by** the fact that the engine mounting plate (41) has at least one attachment bracket (45) for the attachment of a protective engine cap (70).

11. Blower with a blower housing, wherein the blower has a connector unit (40) according to one of the previous Claims.

## Revendications

1. Unité de raccordement formée par une partie latérale (42) d'un boîtier de ventilateur et un support de moteur (41) pour un moteur d'entraînement d'un ventilateur, dans laquelle le support de moteur (41) présente un élément annulaire et peut être fixé à la partie latérale (42) dans différentes positions de rotation ou d'angle par rapport à un axe de rotation s'étendant dans la direction axiale de la partie latérale (42), la partie latérale (42) présentant un creux axial (43) dans lequel l'élément annulaire du support de moteur (41) est inséré et fixé, dans laquelle le support de moteur (41) est réalisé en deux parties avec la partie latérale (42) et y est relié de manière étanche au gaz par un processus de collage ou de clinchage, et dans laquelle
une rotation angulaire du support de moteur (41) étant librement variable par rapport à la partie latérale (42) pour fixer les différentes positions de rotation ou d'angle du support de moteur (41) sur la partie latérale (42), de sorte que tous les angles relatifs sont réalisables et la partie latérale (42) et le support de moteur (41) peuvent à cet égard être fixés librement l'une par rapport à l'autre.

2. Unité de raccordement selon la revendication 1, **caractérisée en ce que** le processus de clinchage est effectué par un assemblage par complémentarité de forme, à la manière d'un bouton-pression, du support de moteur (41) avec la partie latérale (42) dans un processus de façonnage à froid.

3. Unité de raccordement selon l'une quelconque des revendications 1 à 2, **caractérisée en ce que** la partie latérale (42) est une pièce en tôle.

4. Unité de raccordement selon l'une quelconque des revendications 1 à 3, **caractérisée en ce que** la partie latérale (42) présente au moins deux saillies de positionnement par pression pour fixer la position angulaire de la partie latérale (42) sur le boîtier de ventilateur.

5. Unité de raccordement selon l'une quelconque des revendications 1 à 4, **caractérisée en ce que** la partie latérale (42) présente une ouverture de passage axiale (47) pour faire passer un arbre, tout en étant par ailleurs réalisée sans ouverture de passage.

6. Unité de raccordement selon l'une quelconque des revendications 1 à 5, **caractérisée en ce que** le support de moteur (41) présente au moins un logement de moteur.

7. Unité de raccordement selon l'une quelconque des revendications 1 à 6, **caractérisée en ce que** le support de moteur (41) présente au moins trois logements de moteur.

8. Unité de raccordement selon l'une quelconque des revendications 6 à 7, **caractérisée en ce que** chacun des logements de moteur (46) réalise respectivement une ouverture d'insertion (49) pour loger des éléments amortisseurs de vibrations (61).

9. Unité de raccordement selon l'une quelconque des revendications 6 à 8, **caractérisée en ce que** le support de moteur (41) présente l'élément annulaire à partir duquel s'étend chacun des logements de moteur (46) en saillie dans la direction radiale et la direction axiale.

10. Unité de raccordement selon l'une quelconque des revendications 1 à 9, **caractérisée en ce que** le support de moteur (41) présente au moins une bride de fixation (45) pour fixer un capot de protection de moteur (70).

11. Ventilateur comprenant un boîtier de ventilateur, le ventilateur présentant une unité de raccordement (40) selon l'une quelconque des revendications précédentes.
